# EUROPEAN PATENT SPECIFICATION

(11) **EP 4 084 432 B1**
(45) Date of publication and mention of the grant of the patent: **15.01.2025**
(21) Application number: 21171443.1
(22) Date of filing: 30.04.2021
(51) Int. Cl.: H04L 65/1016, H04L 65/1073

(54) **A METHOD, A COMMUNICATION SYSTEM AND A NETWORK ENTITY FOR COMMUNICATING**
VERFAHREN, KOMMUNIKATIONSSYSTEM UND NETZWERKEINHEIT ZUR KOMMUNIKATION
PROCÉDÉ, SYSTÈME DE COMMUNICATION ET ENTITÉ DE RÉSEAU POUR COMMUNIQUER

(43) Date of publication of application: 02.11.2022
(73) Proprietor: Deutsche Telekom AG, 53113 Bonn (DE)
(72) Inventor: DENNERT, Thomas, 53844 Troisdorf (DE)
(74) Representative: Braun-Dullaeus Pannen Emmerling Patent- & Rechtsanwaltspartnerschaft mbB

(56) References cited:
- US-A1- 2016 295 013
- "3rd Generation Partnership Project; Technical Specification Group Services and System Aspects; IP Multimedia Subsystem (IMS); Stage 2 (Release 14)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.1.0, 26 September 2016 (2016-09-26), pages 1 - 317, XP051172563

## Description

The invention relates to a method, a communication system and a network entity for communicating, in particular an IMS based communication system. The communication system is configured to provide communication with client devices and to provide telecommunication services for the client devices.

Document US2016295013 discloses a method and apparatus for Service Profile handling in the IP Multimedia Subsystem. Document 3GPP TS 23.228 V14.1.0, published on 26-09-2016 and entitled "3rd Generation Partnership Project; Technical Specification Group Services and System Aspects; IP Multimedia Subsystem (IMS); Stage 2 (Release 14)", defines the stage-2 service description for the IP Multimedia Core Network Subsystem and identifies the mechanisms to enable support for IP multimedia applications.

The invention is defined by the subject-matter of the independent claims. Further details are provided in the dependent claims.

According to 3GPP IMS and IETF SIP standards a network operator might offer various telecommunication services (e.g. Voice, Video, SMS, Messaging) within an IMS network to client devices of users. Hereby the operator typically offers multiple public identities, which can be used by a user as calling identity for outgoing communication and called identity to receive incoming communication. For example, a user can receive three different telephone numbers and can call other users by using any number out of these three different telephone numbers. Of course, the user can be called by a third party if the caller uses any number out of those three telephone numbers. However, this is not restricted to the telecommunication service "telephone" but to any other service provided by a server of the network provider.

These multiple public identities might be used by one or multiple devices of the user. Hereby each device might use all public identities of the user.

For this purpose, the communication standards define two approaches how to deal with multiple public identities:
Option A) The network supports separate identities within the user's service subscription data for which dedicated registrations can be applied. In this case the device needs to apply a registration per public identity of a user. Per registration context incoming and outgoing communication applies just for the associated identity.

Option B) The network supports usage of multiple public identities associated to one Implicit Registration Set (IRS), which is assigned to a user's IMS service subscription data. In this case the client device registers just once to use all public identities of the user. The device might select for each outgoing communication one identity out of this IRS as outgoing identity within the single registration context. Incoming communication will be offered to the device within the given registration context for any of the identities. This option does not support to use just a subset of user's identities with a single registration.

As mentioned before, a network operator typically offers multiple public identities - according Option A - for one or more client devices of the user. Within the framework of Option A, each one of these public identities needs individual registering in the communication system to access the various offered services. This causes a high network load due to frequent initial registrations and frequent re-registrations per public identity per device.

Therefore, due to load reasons operators prefer the approach according to Option B. This approach reduces frequent initial registrations and re-registrations per device; i.e. the load will be reduced up to a factor 1/(average identities per device). This reduction applies for devices that support Option B.

Devices that support Option B are called single-registration capable devices, in short SR devices, whereas devices that do not support option B are called non single-registration capable devices, in short non-SR devices.

Hereby problems as follows arise for a device which does not support Option B, a non-SR devices, if the network operator plans to implement Option B in a communication network:
a) The non-SR device might still apply multiple registrations, if it wants to use multiple public identities of the user. As a result, the IMS network assumes several clients associated to the given device are registered for all identities given by the IRS within user's subscription profile. Therefore, the IMS network will offer an incoming communication several times to the given device, i.e. one offer per registration context. Beside the unnecessary signalling load, the device will not be able to handle these parallel incoming communication offers in a reasonable way.
b) The non-SR devices will receive incoming communication addressed to any of user's public identities, even if the device registered just one of these public identities; i.e.

- the communication addressed to a dedicated public identity might be offered to a device for which the user did not assign this identity, i.e. did not expect the offered communication;
- The device will not indicate to the user which called identity has been used to address the call.

This leads to the negative effect that network operators do not implement option B even if this would reduce signalling network traffic.

Hence, it is the object of the invention to provide techniques that provides means that a network operator can apply multiple public identities associated to one Implicit Registration Set (IRS) for non-SR devices. In particular, the invention has the task to provide techniques that offer a backwards compatibility for non-SR devices.

This object is solved by the features of the independent claims.

The features of the various aspects of the invention described below or the various examples of implementation may be combined with each other, unless this is explicitly excluded or is technically impossible.

According to a first aspect of the invention, a method is provided for communicating in a communication system, in particular an IMS based communication system,
wherein the system comprises: at least one client device to which at least two public identities are associated, wherein the client devices is configured to register to telecommunication services provided by the communication system with a least one of its public identities of a user; a network entity that is configured to assign public identities to telecommunication services and to control the communication. The communication links of the communication system can be realized with fixed lines or wireless lines or a combination of both. In particular, at least parts of the communication system can be configured to support mobile communication;
the method comprises the following steps:
- Requesting a telecommunication service of the communication system by a first client device or requesting a communication with the first client device by a foreign client device, wherein the request is associated to the one of the public identities of the first client device;
   o for illustration purposes: an example of the requested telecommunication service by the first client device or by the foreign client device can be a phone call to with each other. The devices transmit along with their phone call request the public identity of the other device.
- Sending the request to the network entity;
   o the exemplary telephone call request can be sent over the communication network and needs to be managed within the communication network. For this purpose, it can be sent to a network entity that can be part of the communication network.
- Resolving the request by the network entity by selecting in a database an entry that assigns the requested telecommunication service to the one of the public identities of the first client device;
   o the network entity manages the incoming telephone call request and knows by means of its database to which user or to which client device of the user the transmitted public identity is associated and directs the phone call within the communication network accordingly.

In this context it is a core idea of the invention that the entry comprises an additional individual tag that is configured to link the telecommunication service to one or several public identities out of a set of the at least two public identities of the user.

In an embodiment the additional individual tag links the telecommunication service to one or several public identities out of a set of the at least two public identities of the user without limitating the possibility to resolve a similar request from another of user's clients to a link to the same or another partly overlapping subset of the user's identities.

This solves the problem of using both SR and non-SR client devices within the communication network and applying multiple public identities registration associated to one Implicit Registration Set (IRS) - backwards compatibility for non-SR devices is provided. As mentioned before, using option B can lead to ambiguity issues so that not possible to assign a requested telecommunication service to a unique public identity of the user. For a network operator this provides the advantage that he can apply option B for the registration process to reduce the overall network traffic efficiently. The load reduction corresponds to the number of devices that use Option B.

This shall be illustrated in the example of a phone call. Three telephone numbers, each one representing a public identity, are assigned to a user. This enables the user in principle to assign a different telephone device to each of these numbers, for example to different family members so that each of them has their individual telephone number. For example, if telephone device 1 as the non-SR device would perform the Implicit Registration Set process, it would register three times so that all of the public identities are associated to telephone device 1. As a consequence, the communication network could not address telephone devices 2 and 3 because no public identity is associated to them. On the other hand, if all three telephone devices would perform the registration process, then it is not clear to the communication network to which telephone device phone call with a specific public identity shall be directed.

This issue is solved by the additional individual tag. This additional information enables the network entity to address one or more dedicated client devices to a respective public identity. In principle the additional individual tag allows the network entity to treat SR and non-SR devices separately and to distinguish between them. The SR devices create the unique binding to a public identity already during their registration process so that they do not necessarily need this additional individual tag. If the network identity than "finds" the additional individual tag in the database, it treats the non-SR devices with respect to this additional information.

In the example above this could mean that the database could look for the three non-SR as follows:
PublicID1 | Telephone1, 2, 3 | Additional_Info: PublicID1_telephone1;
PublicID2 | Telephone1, 2, 3 | Additional_Info: PublicID2_telephone2;
PublicID3 | Telephone1, 2, 3 | Additional_Info: PublicID3_telephone3;
During the registration process all 3 Telephones could register with each of the public IDs but the additional information makes it clear to which client device each public ID should be assigned.

Of course, the process is not restricted to a telecommunications service, but supports multiple telecommunication services available today.

To state it differently multiple Clients of a user can apply one registration towards an identity of the user to bind to different, partly overlapping subsets of a set of public identities which is assigned to the user. Hereby the client or the network entity might decide based on various criteria to which subset of a set of identities which is assigned to the user a binding is created by a single registration of a client towards one of user's identities. I.e. e.g. one client might apply one registration towards an identity of the user resulting in a binding to one public identity of the user, whereas another client might apply one registration towards the same identity of the user resulting in binding to all public identities of the user.

In an embodiment, the additional individual tag is created during a registration process of the first client device for the telecommunication service.

This provides the advantage that the additional individual tag is created at a very early stage during the communication process so that the network entity notes in principally right from the start which telecommunication service shall be assigned to which client device by means of the respective public identities. Another advantage is that the client device registers for a distinct telecommunication service in the registration process so that this information can be used to generate the additional individual tag.

In an embodiment, the individual tag is created by the network entity and/or the first client device. The network entity detects if the client device that performs the registration process for data communication service is a non-SR client device and creates the individual tag and stores it in the database. This provides the advantage that backwards compatibility is enabled, because no ambiguity information enters the database. Even if the non-SR client is not able to create this additional individual tag by itself, for example because it does not know that it actually is a non-SR device, the network entity can perform this task for multiple non-SR devices. If the first client device creates the additional individual tag by itself this reduces workload of the network entity. Additionally, if the first client device creates the additional individual tag individual rules to generate this tag can be applied within the first client device, e.g. to bind multiple devices to one public identity.

In an embodiment, individual tag comprises information about the associated telecommunication service. This enables the network entity to assign the appropriate telecommunication service to a distinct client device. This is especially advantageous if not all client device of user support every single telecommunication service. If the first client device requests a telecommunications service, then information about the telecommunication service can be found for example in the "TO-header", which specifies "to" which service request is directed.

In an embodiment, the additional individual tag is created if the first client device has no single registration capability for the its at least two public identities. Hence, the additional individual tag is created if the first client device is a non-SR device. In principle it is possible to create the additional individual tag also for SR-devices but is not necessary and could prevent easy differentiation between non-SR devices and SR by the entries of the database. Therefore, if the additional individual tag is only created for the non-SR devices than the network entity can recognize the SR in the database by an empty "additional individual tag" field.

In an embodiment, the client devices without a single registration capability - the non-SR devices - are stored in a further database along with an individual device identifier. This provides the advantage that the network entity can easily differentiate between a SR and a non-SR device during registration process. If each client device sends an individual device identifier when performing the registration process, it can be easily checked based on the entries in a further database if the client device is a non-SR devices or not. This checking can be performed by the network entity. If the network entity detects that registration requests originates from a non-SR devices than it can create the additional individual tag.

In an embodiment, the database is centrally located in the network. This provides the advantage that the additional individual tag can be managed in a convenient way and easily used by many client devices from different parts of the communication system.

In an embodiment, network entity establishes a communication link of the first client device. This provides the advantage that the network entity can assign the appropriate client device to a request and perform the appropriate AAA procedure via communication with the HSS-server.

In an embodiment, the network entity directs the request for the telecommunication service to a server of the communication system that provides the telecommunication service. This provides the advantage, that the request directed to the "correct" telecommunication service to which the public identity is associated.

In an embodiment, the network entity directs the request for the communication request of the foreign client device to the client device, in particular to the first client device, that carries the public identity associated to the individual tag. This provides the advantage that a distinct client device of the user can be called if the foreign client device uses one of the public identities of the user as a telephone number.

According to a second aspect of the invention, a Network entity for communicating in a communication system, in particular an IMS based communication system, is provided, wherein the network entity comprises
- a communication interface configured to communicate with client devices and/or with servers that provide telecommunication service;
- a computational unit with an algorithm running on the computational unit that is configured
   o to create an individual tag of a first client device for a telecommunication service, wherein the individual tag links the telecommunication service to one of the at least two public identities of the first client according to the method described above during a registration process of the first client device for the telecommunication service;
      and/or
   o to resolve communication requests by the first client device and/or a foreign client device according to the method claims described above and to redirect the request to the telecommunication service or to the client device that is associated to the individual tag.

This solves the problem of using both SR and non-SR client devices within the communication network and applying multiple public identities registration associated to one Implicit Registration Set (IRS) - backwards compatibility for non-SR devices is provided. As mentioned before, using option B can lead to ambiguity issues so that it is not possible to assign a requested telecommunication service to a unique public identity of the user. The network entity is a central core element within communication system to enable the backwards compatibility. The network entity can be a server, in particular a P-CSCF proxy server of a IMS based communication system. The network entity can comprise the database or having access to the database.

According to a third aspect of the invention, a communication system, in particular an IMS based communication system, is provided, wherein the system comprises:
- at least one client device to which at least two public identities are associated, wherein the client devices is configured to register to telecommunication services provided by the communication system with a least one of its public identities;
- a network entity that is configured to assign public identities to telecommunication services and to control the communication,
- a telecommunication service server configured to provide a telecommunication service for the client device;
- a communication network that provides communication means for a data traffic between the client device, the network entity and the telecommunication service server;
the communication system being configured to carry out the steps of the method described above.

This solves the problem of using both SR and non-SR client devices within the communication network and applying multiple public identities registration associated to one Implicit Registration Set (IRS) - backwards compatibility for non-SR devices is provided.

In an embodiment, the communication system comprises client devices with a single registration capability - SR devices - and without the single registration capability - non-SR-devices.

This provides the advantage that both kind of devices can be managed within a single communication system while providing backwards compatibility. This enables network provider to apply the multiple registration process according to option B so that data traffic can efficiently be reduced within the network.

According to a fourth aspect of the invention, computer program comprising instructions which, when the program is executed by a server, cause the server to carry out the steps of the method described above.

In the following, preferred implementation examples of the present invention are explained with reference to the accompanying figure:
- Fig. 1:: shows an example of IMPUs per public user identity that are not shared;
- Fig. 2:: shows an example of IMPUs representing public user identities that are shared by assignment to one Implicit Registration Set;
- Fig. 3:: shows a registration procedure for a client with SR capability.
- Fig. 4:: shows a registration procedure for a client with non-SR capability.
- Fig. 5:: shows a use case of outgoing communication.
- Fig. 6:: shows a terminating communication (TC) to multiple client devices registered for a user's IMS subscription.
- Fig. 7:: shows an alternative registration procedure for a client with SR capability.
- Fig. 8:: shows an alternative registration procedure for a client with non-SR capability.
- Fig. 9:: shows an alternative terminating communication (TC) process for multiple client devices registered for a user's IMS subscription.
- Fig. 10:: shows an overview of the communication system that is configured to run a method according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

In the following, one or more possible exemplary embodiments of the invention are described. Additionally, some terms are described in detail in the following paragraphs and some definitions are provided. In the following the old approach according to option A is often referred to the legacy-approach.

### Multiple public identities within one IRS:

The IMS subscription data (if the user wants to subscribe to a IMS based communication system) in a user profile managed by the network is changed by the invention as follows:
- Legacy
   o Implicit Registration Set (IRS) per public telephony number of the subscriber with
      ▪ telephony number represented by IMPU (= public identity) with tel-uri format;
      ▪ telephony number represented by IMPU with sip-uri format;
- New
   o One Implicit Registration Set (IRS) for all public telephony number of the subscriber with
      ▪ Each telephony number represented by IMPU with tel-uri format;
      ▪ Each telephony number represented by IMPU with sip-uri format;

### Implicit Registration:

Standardised elements shall be applied by a network, i.e. a communication system, and client devices to support an IRS with multiple identities:
- P-Associated-URI to indicate within the registration response the registered identities towards a client;
- P-Preferred-Identity to select for outgoing communication the calling identity among a set of registered identities;
- P-Called-Party-Id to detect for incoming calls to which of the registered identities the call has been addressed;

### Introduction of Specific Caller Preferences:

Either the client device (this method is referred to as "explicit preference") or the network entity (this method is referred to as "implicit preference") add to a registration request specific feature tags (caller preferences) which indicate support for one or multiple identities from the user's IRS. These specific feature tags are the additional individual tags.

This allows for the network entity
- to control which of the user's public identities will be provided as assigned identities with the answer to a registration and therefore can be used for outgoing communication;
- to control for incoming communication which of user's public identities will result in call offer towards a given client device of the user.

This approach enables to differentiate behaviour for communication use cases according to client's capability to support multiple identities within one registration, i.e. to differentiate between SR devices and non-SR devices.

### IMS Subscription Data

### Non-shared IMPUs

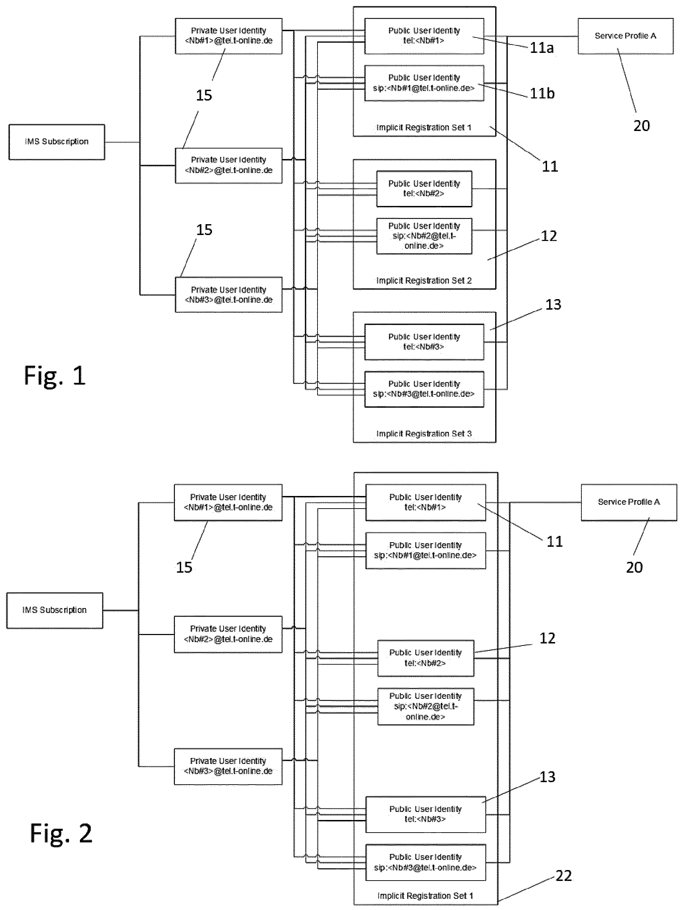

Fig. 1 provides an example with IMPUs per public user identity which are not shared. Nevertheless, per public identity 11, 12, 13 the IMS subscription typically covers an Implicit Registration Set with two IMPUs (in tel-uri 11a and sip-uri 11b format) per public identity. The IMPUs might be assigned to one or multiple IMPIs 15 (Fig. 1 shows the second option). The IMPUs might be assigned to the same or different service profiles 20 (Fig. 1 shows the first option).

### Shared IMPUs

Fig. 2 provides an example with IMPUs representing three public user identities 11, 12, 13 that are shared by assignment to one Implicit Registration Set (IRS) 22. As before - typically, each public identity is represented within the IRS by two IMPUs (in tel-uri and sip-uri format). The IMPUs within the IRS need to be assigned to all IMPIs of the given subscriber. The IMPUs might be assigned to the same or different service profiles 20 (Fig. 2 shows the first option).

In the following, different use cases according to the invention will be presented:
Client devices of the user that can be smartphones, access points, W-LAN Routers and/or Gateways undergo at least one time a registration process to register to a certain data communication service. The request is sent to a network entity, in particular a network entity of a IMS based communication system that can be a P-CSCF proxy. This registration process is used to add an additional individual tag that is configured to link the telecommunication service to one of the public identities and to bind the public identities to the at least one client device or to multiple client device. For this purpose, it is possible to apply certain rules which are executed by an algorithm on the network entity that create the appropriate additional individual tag. These rules can be called P-CSCF rules in the following, because it can be applied by the P-CSCF proxy in an IMS based communication system. It is also possible to name these rules registration rules because they are applied during the registration process. However, it is also possible that these rules are executed by a stateless message manipulation rules engine invoked for processing of outgoing/incoming messages. Another option is that these rules can be implemented within the S-CSCF Core software.

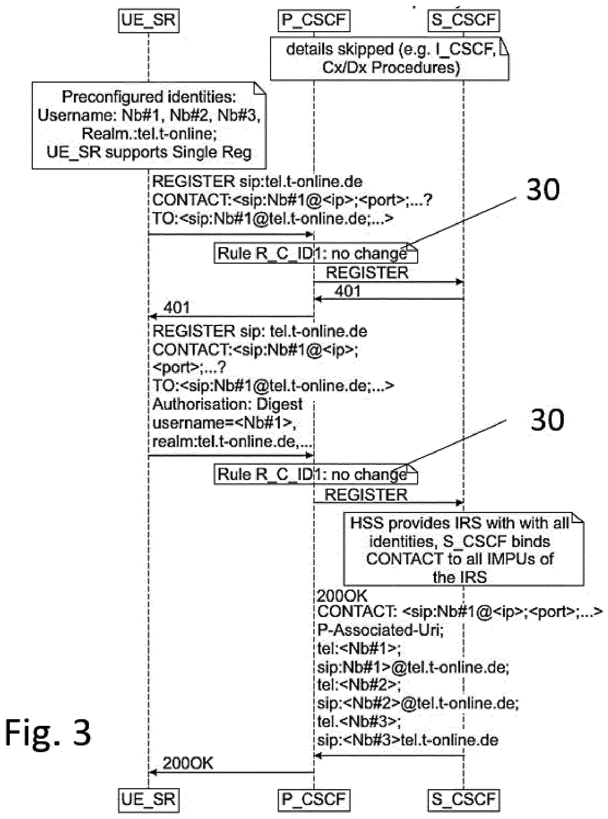

Fig. 3 shows the registration procedure for a SR client device. The client does not need to support any deviations from the 3GPP standards for implicit registration.

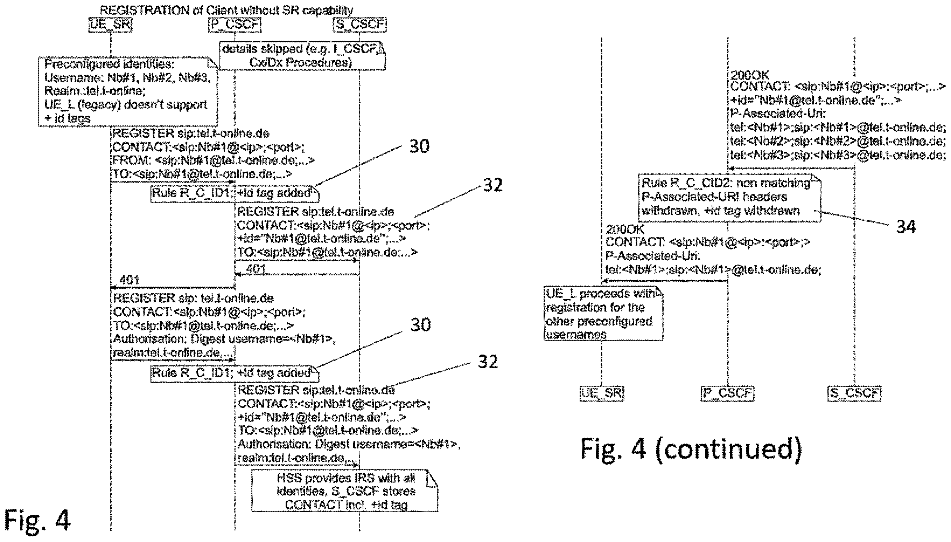

Fig. 4 shows the registration procedure for a non-SR client device. Such a client applies a registration procedure per user's identity.

The algorithm of the registration rule can comprise sub-rules.

A first sub-rule of the registration rule, which can be called Rule P_C_ID1, performs the following steps:
For any REGISTER method send by P-CSCF to S-CSCF:

```
     IF (USER_AGENT not in whitelist (Clients w/ SR support))
    THEN
            add +id tag with value according to identity given by the TO header
    ENDIF
```

Hence, in step 30 the first sub-rule checks during a registration process of the client device if there is an entry within a database that specifies if the client device is a SR or a non-SR device. If the client device is a non-SR device, then capability problems might occur if the method of using an implicit registration set is used (option B). Therefore, in step 32 the additional individual tag is being created and added to the database. The database can be the same database as the one in which the information about the SR or non-SR capabilities of the client device is stored. The additional individual tag comprises information about the respective data communication service to which the client device registers. Information about the respective telecommunication can be found in the "TO"-header that states to which telecommunication service the registration request is to be transmitted.

The value in +id tag can be provided as global number in sip-uri format (+CC NDC SN@domain) enclosed by double quotes. Example: Contact: <sip:+49 228 4711000@17.230.140.24:32909;+id="+492284711000@tel.t-online.de"; In advance to the given rule, a TO header which provides a tel-uri needs to be mapped to a sip-uri with global number format:

```
 IF TO header given by tel-uri (tel: 00 CC NDC SN, tel: 0 NDC SN)
    THEN
           map to sip-uri with global number format (+CC NDC SN@tel.t-
           online.de)
    ENDIF
```

A second sub-rule of the registration rule - which can be called Rule P_C_ID2 - performs the following step 34:

### Rule P_C_ID2:

For any 200OK response for the REGISTER method which is received from IMS-Core:

```
     IF (+id tag in CONTACT header exists)
    THEN
     Remove any P-Associated-URI header which does not fit to any value of
    a +id tag within the CONTACT header
            If P-Associated-URI header provides an identity with tel-uri format
            then just the userpart of the +id tag is compared with this identity
            to find a match
    Remove any +id tag within the CONTACT header
    ENDIF
```

Rule P_C_ID2 removes +id feature tags in the CONTACT header during the registration response. However, this step is optional. It is also possible that the +id feature tags set by the network shall be withdrawn from the CONTACT header for any message send to a legacy client to hide the network internal CONTACT header manipulations. To support this option an additional feature tag provided by clients supporting multiple ids might be introduced. An additional rule applied for any message send to a client needs to use presence/absence of this additional feature tag as criteria whether to withdraw any feature tag which has been implicitly added by the network (i.e. by rule P_C_ID1). As a downside, such a rule results in additional processing load.

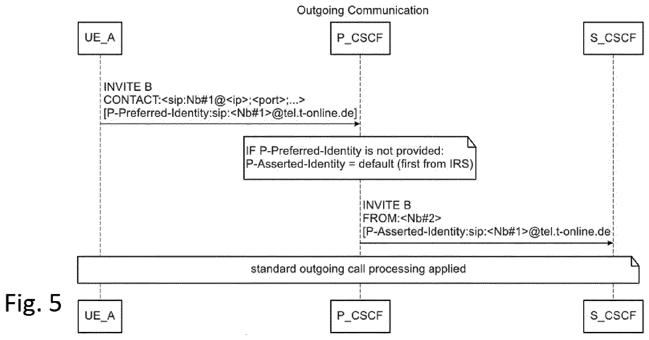

A further use case is shown in Fig. 5 that shows the use case of an outgoing communication. This happens, if the client device contacts one of the telecommunication services, for example the client device makes a phone call.

For the use case of outgoing communication, no specific requirements need to be applied to support the implementation of option B. The client device uses one of its public identities that are registered to the telecommunication service to use this telecommunication service. The S_CSCF direct this communication to the appropriate telecommunication services within the IMS communication system.

Another use case is an incoming call that can be also specified as a terminating communication (TC). In both cases a foreign client device or a specific telecommunication service within the IMS communication system tries to establish a communication with one of the client device is of the user. In this use case, a terminating rule - that can also be called a R_TC - shall be applied by an IMS Application Server terminating a session to establish the communication with the appropriate client device of the user.

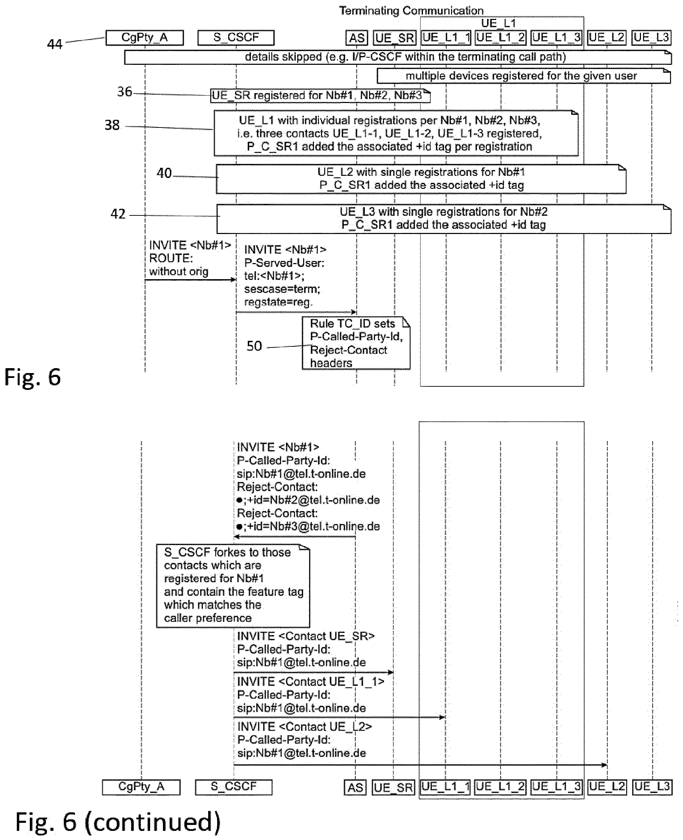

Fig. 6 shows the terminating communication (TC) to multiple client devices registered for a user's IMS subscription.

The client devices of the user can be SR and/or non-SR devices and they can be registered for one or multiple telecommunication services.

For example,
- UE_SR 36 as a SR device is registered for the following public identities NB#1, NB#2, NB#3.
- UE_L1 38 as a non-SR device has performed registrations for NB#1, NB#2, NB#3. This basically means that the three different contacts are registered, namely UE_L1_1, UE_L1_2, UE_L1_3. One additional individual tags were added for each of the NB#1, NB#2, NB#3 to the database during the registration process by the registration rule.
- UE_L2 40 as a non-SR device has performed registrations for NB#1. One additional individual tag was added for NB#1 to the database during the registration process by the registration rule.
- UE_L2 42 as a non-SR device has performed registrations for NB#2. One additional individual tag was added for NB#2 to the database during the registration process by the registration rule.

If a telecommunications service or a foreign client device 44 wants to establish a telecommunication service with one of public identities of the user, then this communication needs to be directed to the client device that is registered for this telecommunication service. For example, if the public identities represent telephone numbers this means that the incoming phone call of a foreign telephone 44 needs to be directed to the client device that is associated to this telephone number.

For this purpose, the incoming request is sent to the network entity that applies the following terminating communication rule step 50 (R_TC) by an algorithm implemented on the network entity:

### Rule R_TC:

For terminating a call terminated to a dedicated identity (given by the request line):
- Set P-Called-Party-ID: identity from request line (sip-uri format)
   o e.g. P-Called-Party-Id:sip:<nb@domain>
- Set Reject-Contact headers (defined by RFC 3841) per identity of the user which is not called
   o with:
      ▪ caller preference with identity which does not fit to the request line;
      ▪ "explicit" and "require";
   o e.g.: Reject-Contact:*;+id:"<nb>@<domain>";

Hence, due to the additional individual tag within the database, the network entity can determine which of the client device is assigned to a telecommunications service. Or for the example of the telephone call. The network entity can determine which of the client telephones the phone call shall be directed.

In the case of Fig. 6, the public identity NB#1 as to the number was being called by the foreign telephone 44. Since UE_SR, UE_L1 and UE_L2 have been registered for this telephone number, the incoming call is directed to each of the three devices.

Terminating a call to an identity for which no client with either SR support or implicit +id feature tag is registered: There might be active registrations, but without any client implicitly registered to a certain identity Nb#x. Typically, this can occur if the registered clients neither support the SR approach nor apply a dedicated registration for the identity Nb#x (i.e. might not occur significantly in a real network environment). In this case the terminating AS is not aware that an incoming communication request addressed to Nb#x does not fit to any registered client. The AS will send the request with header "Accept-Contact:*;+id="Nb#x";explicit;require" towards the S-CSCF, but the S-CSCF will not find any registered contact which matches this caller preference. After timeout or rejection by the S-CSCF the AS should apply terminating session handling as applied in case of "no client registered", e.g. "CDIV not registered".

It is also possible to implement the registration process and the terminating communication process in another variation. Hence, this alternative option of implementing the two processes will be shown in the following. The rules applied in this second option referred to as being the alternative registration rule and the alternative terminating communication rule.

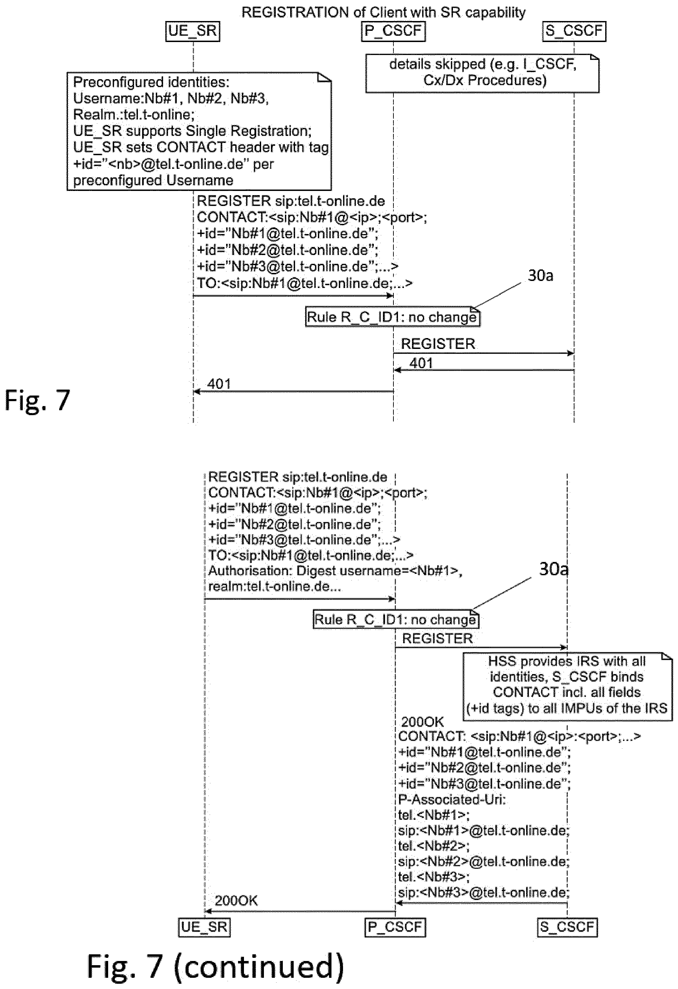

Fig. 7 shows the alternative registration procedure for a client device with SR capability.

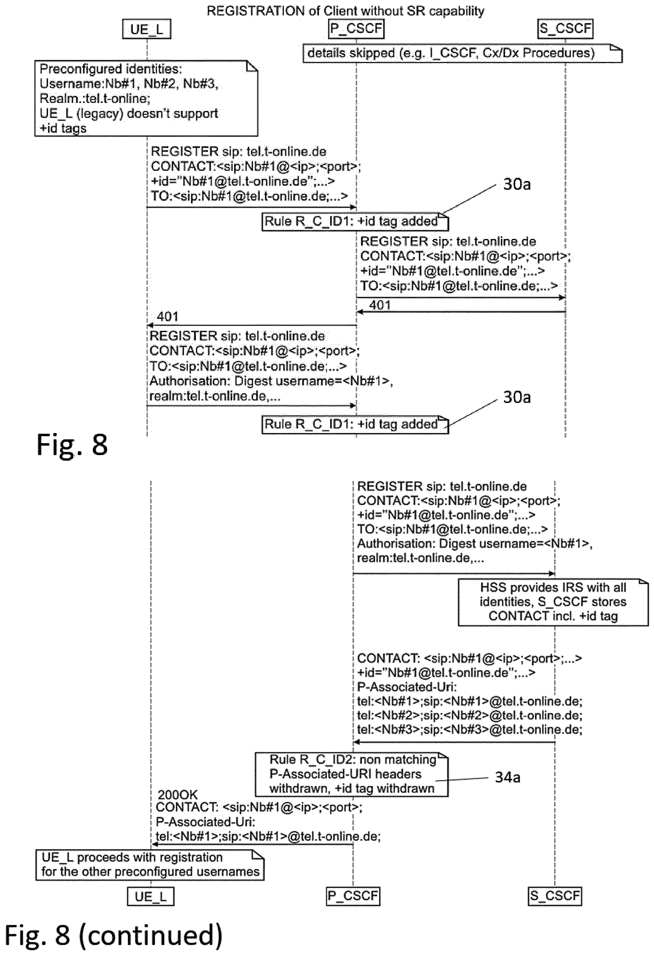

Fig. 8 shows the alternative registration procedure for a client device with non-SR capability.

The alternative registration rules can be applied by either the P-CSCF Core SW, by stateless message manipulation rules (SMM Rule) executed for outgoing/incoming messages or by S-CSCF Core SW.

### Alternative P_C_ID1 rule:

For any REGISTER method send by P-CSCF to S-CSCF:

### Step 30a:

```
     IF ((no feature tag +id in CONTACT header) OR (identity given by the TO
    header does not match the value assigned to any +id tag in CONTACT
    header))
    THEN
            add +id tag with value according to identity given by the TO header
    ENDIF
```

The value in +id tag shall be provided as global number in sip-uri format (+CC NDC SN@domain) enclosed by double quotes. Example: Contact:<sip:+49 228 4711000@17.230.140.24:32909;+id="+492284711000@tel.t-online.de";....>. In advance to the given rule a TO header which provides a tel-uri needs to be mapped to a sip-uri with global number format:

```
     IF TO header given by tel-uri (tel: 00 CC NDC SN, tel: 0 NDC SN)
    THEN
            map to sip-uri with global number format (+CC NDC SN@tel.t-
           online.de)
    ENDIF
```

### Step 34a:

### Alternative P_C_ID2 rule:

For any 200OK response for the REGISTER method which is received from IMS-Core:

```
    Remove any P-Associated-URI header which does not fit to any value of
    a +id tag within the CONTACT header
            If P-Associated-URI header provides an identity with tel-uri format
            then just the userpart of the +id tag is compared with this identity
            to find a match
     If (no P-Associated-URI header remains)
    THEN
            Remove any +id tag within the CONTACT header
    ENDIF
```

Alternative Rule P_C_ID2 removes +id feature tags in the CONTACT header within the registration response. This might not be necessary. Optionally, the +id feature tags set by the network can be withdrawn from the CONTACT header for any message send to a legacy client to hide the network internal CONTACT header manipulations. To support this option an additional feature tag provided by clients supporting multiple ids might be introduced. An additional rule applied for any message send to a client needs to use presence/absence of this additional feature tag as criteria whether to withdraw any feature tag which has been implicitly added by the network (i.e. by alternative rule P_C_ID1). As a downside, this results in additional processing load.

Regarding the use case of the outgoing communication, nothing changes if the alternative registration rule is applied.

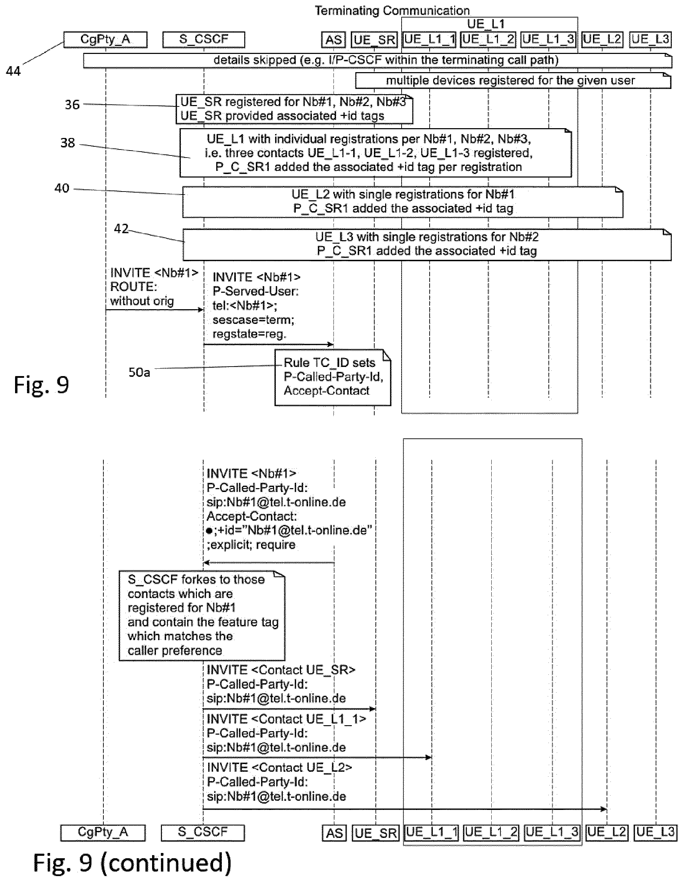

Fig. 9 shows the alternative terminating communication (TC) process for multiple client devices registered for a user's IMS subscription. The basic set up is the same as depicted and described in the context of Fig. 6. However, in this case the alternative terminating communication rule 50a is applied.

### Alternative terminating communication rule Rule R_TC 50a:

For terminating call terminated to a dedicated identity (given by the request line):
- Set P-Called-Party-ID: identity from request line (sip-uri format);
   o e.g. P-Called-Party-Id:sip:<nb@domain>;
- Set Accept-Contact header (defined by RFC 3841);
   o with
      ▪ caller preference with identity from request line;
      ▪ "explicit" and "require";
   o e.g.: Accept-Contact:*;+id:"<nb>@<domain>";explicit; require;

Hence, the alternative termination communication rule 50a enables that the call of the foreign device 44 is directed to one of the appropriate client devices of the user. The S_CSCF forks to those contacts, which are requested for Nb#1 and contain the feature tag, which matches the caller preference.

Explicit +id feature tags for subset of user's identities: Even if the user has multiple public identities, he might wish to disable some of these identities for a certain client. In this case the client might not setup outgoing communication with the disabled identities and needs to reject incoming calls addressed to this identity. But it is more efficient if the client uses the given new approach to indicate the desired subset of identities which it wants to use by sending just for the numbers it wants to use the +id feature tags within the CONTACT header. This capability is just feasible with the given implementation option.

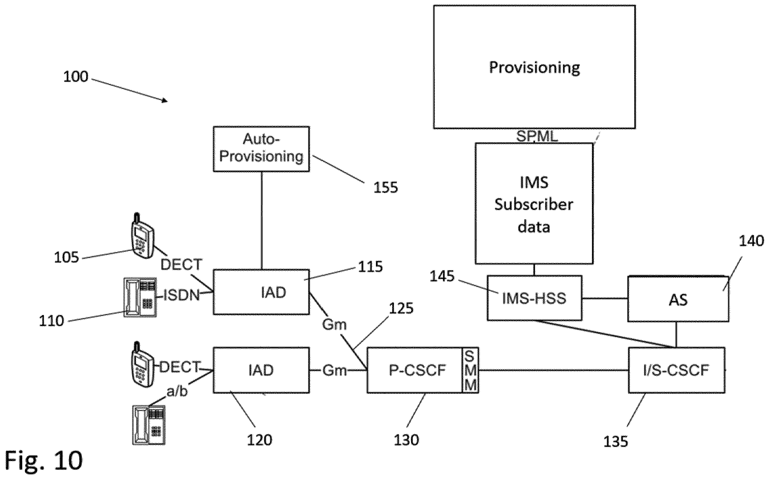

Fig. 10 shows an overview of a communication system 100 that is configured to run a method according to the invention.

Fig. 10 shows user equipment like smart phones 105 and telephones 110 that are connected to a non SR client device 115 and to a SR client device 120. The client devices can be Internet Access Devices IAD like routers. The client devices 115, 120 provide a communication link 125 for the user to a communication network. For this purpose, the client devices 115, 120 connected via the communication link 125 to a network entity 130. The network entity 130 can be a server-based entity that is configured to run an algorithm that executes the registration and/or terminating rules as described above. The network entity 130 can run the algorithm according to the inventive method. The network entity 130 can comprise or is connected to a database that manages the entries of the additional individual tags. If the communication network is an IMS network, then the network entity 130 typically is a P_CSCF 130. The P_CSCF 130 can transfer a registration process of the client devices 115, 120 two a I/S_CSCF proxy 135 that controls the communication by steering it to the appropriate telecommunication services 140. In addition, the I/S_CSCF proxy 135 has access to an IMS-HSS database 145 in which further information (e.g. authentication information) about the user is being stored. The database with the additional individual tags can be implemented in the P_CSCF 130, the I/S_CSCF proxy 135 or the IMS-HSS database 145.

The SR client 120 shall support procedures as follows:

### 1) Registration Procedure;

- Apply registration for one number out of the set of pre-configured own numbers;

```
 IF P-Associated-URI headers in Registration Response provide all pre-
 configured own numbers
 THEN
    registration done
    ELSE
    proceed with registration for further numbers (legacy approach)
    ENDIF
```

### 2) Outgoing Call (OC):

Provide always P-Preferred-Identity according to number assigned for the given call;

### 3) Terminating Call (TC):

If multiple P-Associated-URI are assigned to the registration context in which the TC is received, then the P-Called-Party needs to be observed to decide which of user's numbers is called

These procedures 1) to 3) are fully in line with 3GPP IMS and IETF SIP standards: Additional local (user menu)/ remote (auto-config) configuration to enable/disable implicit registration support is not required. The client device "learns" from the registration response whether the network supports an implicit registration set with multiple identities.

### Provisioning:

- For each public telephony number, which is assigned to a user, the IT Provisioning 150 assigns a dedicated IRS with two IMPUs representing the telephony number as tel-uri and sip-uri (canonical form without user=phone);
- There can be just one IRS, which covers all public telephony numbers assigned to the user. Again, each public telephony number shall result in two IMPIs representing the telephony number as tel-uri and sip-uri (canonical form without user=phone);

P-CSCF 130 shall support rules defined above.

Application Server (AS) 140 serving terminating calls shall support the terminating rule described above.

## Claims

1. A method for communicating in a communication system, in particular an IMS based communication system,
wherein the system comprises (100): at least one client device (115, 120) to which at least two public identities (11, 12, 13) are associated, wherein the client devices is configured to register to telecommunication services (140) provided by the communication system with a least one of its public identities of a user; a network entity (130) that is configured to assign public identities to telecommunication services and to control the communication;
the method comprises the following steps:
• Requesting a telecommunication service of the communication system by a first client device or requesting a communication with the first client device by a foreign client device, wherein the request is associated to the one of the public identities of the first client device;
• Sending the request to the network entity;
• Resolving the request by the network entity by selecting in a database an entry that assigns the requested telecommunication service to the one of the public identities of the first client device;
**characterized in that**
the entry comprises an additional individual tag that is configured to link the telecommunication service to one or several public identities out of a set of the at least two public identities of the user,
wherein the individual tag is created (30) during a registration process of the first client device for the telecommunication service, wherein the individual tag is created by the network entity, wherein the network entity detects if the first client device that performs the registration process for data communication service is a non single-registration, non-SR, client device and only creates the individual tag and stores it in the database for non-SR clients device.

2. The method claim 1, wherein the individual tag comprises information (32) about the associated telecommunication service.

3. The method of any of the claims 1 to 2, wherein the individual tag is created if the first client device has no single registration capability for the its at least two public identities

4. The method of any of the preceding claims, wherein the client devices without a single registration capability are stored in a further database.

5. The method of any of the preceding claims, wherein the network entity establishes a communication link of the first client device.

6. The method of any of the preceding claims, wherein the network entity directs the request for the telecommunication service to a server of the communication system that provides the telecommunication service.

7. The method of any of the preceding claims, wherein the network entity directs the request for the communication request of the foreign client device to the client device, in particular to the first client device, that carries the public identity associated to the individual tag.

8. The method of claim 7, wherein more than one client device, in particular a second client device, carries the public identity.

9. A Network entity for communicating in a communication system, in particular an IMS based communication system, wherein the network entity comprises
• a communication interface configured to communicate with client devices and/or with servers that provide telecommunication service;
• a computational unit with an algorithm running on the computational unit that is configured
∘ to create, during a registration process,
an individual tag of a first client device for a telecommunication service, wherein the individual tag links the telecommunication service to one of the at least two public identities of the first client according to the method claim 1 during the registration process of the first client device for the telecommunication service,
**characterized in that** the network entity is configured to detect if the first client device that performs the registration process for data communication service is a non single-registration, non-SR, client device and to create the individual tag only if the client device is a non-SR client device.

10. The Network entity of claim 9 for communicating in the communication system, in particular the IMS based communication system, wherein the network entity comprises
• the communication interface configured to communicate with client devices and/or with servers that provide telecommunication service;
• the computational unit with the algorithm running on the computational unit that is configured
∘ to resolve communication requests by the first client device and/or a foreign client device according to the method of claims 1 or 6 to 8 and to redirect the request to the telecommunication service or to the client device that is associated to the individual tag.

11. A communication system, in particular an IMS based communication system, wherein the system comprises:
• at least one client device to which at least two public identities are associated, wherein the client devices is configured to register to telecommunication services provided by the communication system with a least one of its public identities;
• a network entity that is configured to assign public identities to telecommunication services and to control the communication;
• a telecommunication service server configured to provide a telecommunication service for the client device;
• a communication network that provides communication means for a data traffic between the client device, the network entity and the telecommunication service server;
the communication system being configured to carry out the steps of the method according to the claims 1- 8.

12. The communication system of claim 11, wherein the communication system comprises client devices with a single registration capability and without the single registration capability.

13. A computer program comprising instructions which, when the program is executed by a server, cause the server to carry out the steps of the method of claims 1-8.

## Patentansprüche

1. Verfahren zum Kommunizieren in einem Kommunikationssystem, insbesondere einem IMS-basierten Kommunikationssystem,
wobei das System umfasst (100): mindestens eine Client-Vorrichtung (115, 120), mit der mindestens zwei öffentliche Identitäten (11, 12, 13) assoziiert sind, wobei die Client-Vorrichtungen dazu eingerichtet ist, sich mit mindestens einer ihrer öffentlichen Identitäten eines Benutzers bei von dem Kommunikationssystem bereitgestellten Telekommunikationsdiensten (140) zu registrieren; eine Netzwerkentität (130), die dazu eingerichtet ist, öffentliche Identitäten an Telekommunikationsdienste zuzuweisen und die Kommunikation zu steuern;
wobei das Verfahren die folgenden Schritte umfasst:
- Anfordern eines Telekommunikationsdienstes des Kommunikationssystems durch eine erste Client-Vorrichtung oder Anfordern einer Kommunikation mit der ersten Client-Vorrichtung durch eine fremde Client-Vorrichtung, wobei die Anforderung mit der einen der öffentlichen Identitäten der ersten Client-Vorrichtung assoziiert ist;
- Senden der Anforderung an die Netzwerkentität;
- Auflösen der Anforderung durch die Netzwerkentität durch Auswählen eines Eintrags in einer Datenbank, der den angeforderten Telekommunikationsdienst der einen der öffentlichen Identitäten der ersten Client-Vorrichtung zuweist;
**dadurch gekennzeichnet, dass**
der Eintrag ein zusätzliches individuelles Kennzeichen umfasst, das dazu eingerichtet ist, den Telekommunikationsdienst mit einer oder mehreren öffentlichen Identitäten aus einer Menge der mindestens zwei öffentlichen Identitäten des Benutzers zu verknüpfen,
wobei das individuelle Kennzeichen während eines Registrierungsvorgangs der ersten Client-Vorrichtung für den Telekommunikationsdienst erzeugt wird (30), wobei das individuelle Kennzeichen von der Netzwerkentität erzeugt wird, wobei die Netzwerkentität erkennt, ob die erste Client-Vorrichtung, die den Registrierungsvorgang für Datenkommunikationsdienst durchführt, eine Nicht-Einzelregistrierungs-Client-Vorrichtung, Nicht-SR-Client-Vorrichtung, ist und das individuelle Kennzeichnen nur für Nicht-SR-Client-Vorrichtungen erzeugt und in der Datenbank speichert.

2. Verfahren nach Anspruch 1, wobei das individuelle Kennzeichen Informationen (32) über den assoziierten Telekommunikationsdienst umfasst.

3. Verfahren nach einem der Ansprüche 1 bis 2, wobei das individuelle Kennzeichnen erzeugt wird, falls die erste Client-Vorrichtung keine Einzelregistrierungsfähigkeit für die ihren mindestens zwei öffentlichen Identitäten aufweist.

4. Verfahren nach einem der vorhergehenden Ansprüche, wobei die Client-Vorrichtungen ohne Einzelregistrierungsfähigkeit in einer weiteren Datenbank gespeichert werden.

5. Verfahren nach einem der vorhergehenden Ansprüche, wobei die Netzwerkentität eine Kommunikationsverbindung der ersten Client-Vorrichtung einrichtet.

6. Verfahren nach einem der vorhergehenden Ansprüche, wobei die Netzwerkentität die Anforderung des Telekommunikationsdiensts an einen Server des den Telekommunikationsdienst bereitstellenden Kommunikationssystems leitet.

7. Verfahren nach einem der vorhergehenden Ansprüche, wobei die Netzwerkentität die Anforderung der Kommunikationsanforderung der fremden Client-Vorrichtung an die Client-Vorrichtung, insbesondere an die erste Client-Vorrichtung, die die dem individuellen Kennzeichen zugeordnete öffentliche Identität trägt, leitet.

8. Verfahren nach Anspruch 7, wobei mehr als eine Client-Vorrichtung, insbesondere eine zweite Client-Vorrichtung, die öffentliche Identität trägt.

9. Netzwerkentität zum Kommunizieren in einem Kommunikationssystem, insbesondere einem IMS-basierten Kommunikationssystem, wobei die Netzwerkentität umfasst:
- eine Kommunikationsschnittstelle, die dazu eingerichtet ist, mit Client-Vorrichtungen und/oder mit Servern, die Telekommunikationsdienst bereitstellen, zu kommunizieren;
- eine Recheneinheit mit einem Algorithmus, der auf der Recheneinheit läuft und dazu eingerichtet ist,
- während eines Registrierungsvorgangs ein individuelles Kennzeichen einer ersten Client-Vorrichtung für einen Telekommunikationsdienst zu erzeugen, wobei das individuelle Kennzeichnen während des Registrierungsvorgang der ersten Client-Vorrichtung bei dem Telekommunikationsdienst nach Verfahrensanspruch 1 den Telekommunikationsdienst mit einer der mindestens zwei öffentlichen Identitäten des ersten Clients verknüpft,
**dadurch gekennzeichnet, dass** die Netzwerkentität dazu eingerichtet ist, zu erkennen, ob die erste Client-Vorrichtung, welche den Registrierungsprozess für Datenkommunikationsdienst durchführt, eine Nicht-Einzelregistrierungs-Client-Vorrichtung, Nicht-SR-Client-Vorrichtung, ist, und das individuelle Kennzeichen nur zu erzeugen, falls die erste Client-Vorrichtung eine Nicht-SR-Client-Vorrichtung ist.

10. Netzwerkentität nach Anspruch 9 zum Kommunizieren in dem Kommunikationssystem, insbesondere dem IMS-basierten Kommunikationssystem, wobei die Netzwerkentität umfasst:
- die Kommunikationsschnittstelle, die dazu eingerichtet ist, mit Client-Vorrichtungen und/oder mit Servern, die Telekommunikationsdienst bereitstellen, zu kommunizieren;
- die Recheneinheit mit dem Algorithmus, der auf der Recheneinheit läuft, dazu eingerichtet,
- Kommunikationsanfragen von der ersten Client-Vorrichtung und/oder einer fremden Client-Vorrichtung nach dem Verfahren der Ansprüche 1 oder 6 bis 8 aufzulösen und die Anforderung an den Telekommunikationsdienst oder an die Client-Vorrichtung, der/die mit dem individuellen Kennzeichen assoziiert ist, zu leiten.

11. Kommunikationssystem, insbesondere ein IMS-basiertes Kommunikationssystem, wobei das System umfasst:
- mindestens eine Client-Vorrichtung, mit der mindestens zwei öffentliche Identitäten assoziiert sind, wobei die Client-Vorrichtungen dazu eingerichtet ist, sich bei von dem Kommunikationssystem bereitgestellten Telekommunikationsdiensten mit mindestens einer seiner öffentlichen Identitäten zu registrieren;
- eine Netzwerk-Entität, die dazu eingerichtet ist, öffentliche Identitäten an Telekommunikationsdienste zuzuweisen und die Kommunikation zu steuern;
- einen Telekommunikationsdienst-Server, der dazu eingerichtet ist, einen Telekommunikationsdienst für die Client-Vorrichtung bereitzustellen;
- ein Kommunikationsnetzwerk, das Kommunikationsmittel für einen Datenverkehr zwischen der Client-Vorrichtung, der Netzwerkentität und dem Telekommunikationsdienst-Server bereitstellt;
wobei das Kommunikationssystem dazu eingerichtet ist, die Schritte das Verfahrens nach den Ansprüchen 1-8 auszuführen.

12. Kommunikationssystem nach Anspruch 11, wobei das Kommunikationssystem Client-Vorrichtungen mit einer Einzelregistrierungsfähigkeit und ohne die Einzelregistrierungsfähigkeit umfasst.

13. Computerprogramm, das Anweisungen umfasst, die, wenn das Programm von einem Server ausgeführt wird, den Server dazu veranlassen, die Schritte des Verfahrens nach den Ansprüchen 1-8 auszuführen.

## Revendications

1. Procédé de communication dans un système de communication, en particulier un système de communication basé sur IMS, dans lequel le système comprend (100) : au moins un dispositif client (115, 120) auquel sont associées au moins deux identités publiques (11, 12, 13), dans lequel le dispositif client est configuré pour s'enregistrer auprès de services de télécommunication (140) fournis par le système de communication avec au moins une de ses identités publiques d'un utilisateur ; une entité de réseau (130) configurée pour attribuer des identités publiques à des services de télécommunication et commander la communication ; le procédé comprend les étapes suivantes :
- demande d'un service de télécommunication du système de communication par un premier dispositif client ou demande d'une communication avec le premier dispositif client par un dispositif client étranger, dans lequel la demande est associée à une des identités publiques du premier dispositif client ;
- envoi de la demande à l'entité de réseau ;
- résolution de la demande par l'entité de réseau en sélectionnant dans une base de données une entrée qui attribue le service de télécommunication demandé à une des identités publiques du premier dispositif client ;
**caractérisé en ce que**
l'entrée comprend une balise individuelle supplémentaire qui est configurée pour lier le service de télécommunication à une ou plusieurs entités publiques parmi un ensemble des au moins deux identités publiques de l'utilisateur,
dans lequel la balise individuelle est créée (30) pendant un processus d'enregistrement du premier dispositif client auprès du service de télécommunication, dans lequel la balise individuelle est créée par l'entité de réseau, dans lequel l'entité de réseau détecte si le premier dispositif client qui exécute le processus d'enregistrement auprès du service de télécommunication est un dispositif client à enregistrement non unique, non-SR, et crée seulement la balise individuelle et la mémorise dans la base de données pour le dispositif client non-SR.

2. Procédé selon la revendication 1, dans lequel la balise individuelle comprend des informations (32) relatives au service de télécommunication associé.

3. Procédé selon une quelconque des revendications 1 à 2, dans lequel la balise individuelle est réée si le premier dispositif client a une capacité d'enregistrement non unique pour ses au moins deux identités publiques.

4. Procédé selon une quelconque des revendications précédentes, dans lequel les dispositifs clients sans capacité d'enregistrement unique sont mémorisés dans une base de données supplémentaire.

5. Procédé selon une quelconque des revendications précédentes, dans lequel l'entité de réseau établit une liaison de communication du premier dispositif client.

6. Procédé selon une quelconque des revendications précédentes, dans lequel l'entité de réseau dirige la demande de service de télécommunication vers un serveur du système de communication qui fournit le service de télécommunication.

7. Procédé selon une quelconque des revendications précédentes, dans lequel l'entité de réseau dirige la demande de communication du dispositif client étranger vers le dispositif client, en particulier vers le premier dispositif client, qui porte l'identité publique associée à la balise individuelle.

8. Procédé selon la revendication 7, dans lequel plus d'un dispositif client, en particulier un deuxième dispositif client, porte l'identité publique.

9. Entité de réseau destinée à communiquer dans un système de communication, en particulier un système de communication basé sur IMS, dans laquelle l'entité de réseau comprend
- une interface de communication configurée pour communiquer avec des dispositifs clients et/ou avec des serveurs qui fournissent un service de télécommunication ;
- une unité de calcul informatique avec un algorithme exécuté sur l'unité de calcul qui est configurée
- pour créer, pendant un processus d'enregistrement, une balise individuelle d'un premier dispositif client pour un service de télécommunication, dans lequel la balise individuelle lie le service de télécommunication à une des au moins deux identités publiques du premier client selon le procédé de la revendication 1 pendant le processus d'enregistrement du premier dispositif client pour le service de télécommunication,
**caractérisé en ce que** l'entité de réseau est configurée pour détecter si le premier dispositif client qui exécute le processus d'enregistrement pour le service de télécommunication est un dispositif client à enregistrement non unique, non-SR, et pour créer la balise individuelle seulement si le dispositif client est un dispositif client non-SR.

10. Entité de réseau selon la revendication 9 pour communiquer dans le système de communication électronique, en particulier le système de communication basé sur IMS, dans lequel l'entité de réseau comprend
- l'interface de communication électronique configurée pour communiquer avec des dispositifs clients et/ou avec des serveurs qui fournissent un service de télécommunication ;
- l'unité de calcul informatique avec l'algorithme exécuté sur l'unité de calcul qui est configurée
- pour résoudre les demandes de communication par le premier dispositif client et/ou un dispositif client étranger selon le procédé des revendications 1 ou 6 à 8 et pour rediriger la demande vers le service de télécommunication ou vers le dispositif client qui est associé à la balise individuelle.

11. Système de communication, en particulier un système de communication basé sur IMS, dans lequel le système comprend :
- au moins un dispositif client auquel au moins deux identités publiques sont associées, dans lequel le dispositif client est configuré pour s'enregistrer auprès des services de télécommunication fournis par le système de communication avec au moins une de ses identités publiques ;
- une entité de réseau qui est configurée pour attribuer des identités publiques aux services de télécommunication et pour commander la communication ;
- un serveur de service de télécommunication configuré pour fournir un service de télécommunication pour le dispositif client ;
- un réseau de communication qui fournit un moyen de communication pour un trafic de données entre le dispositif client, l'entité de réseau et le serveur de service de télécommunication ;
le système de communication étant configuré pour mettre en œuvre les étapes du procédé selon la revendications 1 à 8.

12. Système de communication selon la revendication 11, dans lequel le système de communication comprend des dispositifs clients avec une capacité d'enregistrement unique et sans la capacité d'enregistrement unique.

13. Programme informatique comprenant des instructions qui, lorsque le programme est exécuté par un serveur, amènent le serveur à mettre en œuvre les étapes du procédé des revendications 1 à 8.
